# EUROPÄISCHE PATENTSCHRIFT

(11) **EP 2 239 285 B1**
(45) Veröffentlichungstag und Bekanntmachung des Hinweises auf die Patenterteilung: **08.06.2011**
(21) Anmeldenummer: 09157498.8
(22) Anmeldetag: 07.04.2009
(51) Int. Cl.: C08F 220/18, C08F 222/10, C09K 11/00, G02B 1/10

(54) **Abformzusammensetzung**
Casting compound
Composition de formage

(43) Veröffentlichungstag der Anmeldung: 13.10.2010
(73) Patentinhaber: Nanogate Industrial Solutions GmbH, 66287 Quierschied-Göttelborn (DE)
(72) Erfinder: Klenke, Martin, Dr., 66440 Blieskastel (DE)
(74) Vertreter: von Kreisler Selting Werner

(56) Entgegenhaltungen:
- EP-A1- 1 700 871
- JP-A- 2001 159 875
- JP-A- 2001 318 604

## Beschreibung

Die Erfindung betrifft einen Formkörper und ein Verfahren zum Erzeugen dieses Formkörpers mit einer Oberflächenstruktur.

US 4,511,209 A beschreibt Zusammensetzungen mit verbesserten optischen Eigenschaften, die auf hochfluorierten monofunktionalen Acrylaten beruhen, die zur Verwendung in optischen Gegenständen vernetzt sind. Die bevorzugten Komponenten der Zusammensetzungen sind (1) ein hochfluoriertes monofunktionelles Acrylat, (2) ein trifunktional oder höherfunktionales Acrylat, das als Vernetzungsmittel dient (3), ein mono- oder polyfunktionales Thiolsynergist und (4) ein Photoinitiator, wie beispielsweise ein UV-Initiator.

WO 92/21492 beschreibt Glasgegenstände mit verbessertem Feuchtigkeitswiderstand, der durch eine Beschichtung der Oberfläche erreicht werden soll. Die reaktive Beschichtungszusammensetzung umfasst etwa 10 bis 74 Gew.% eines filmbildenden Monomers mit zwei (Meth-)Acryloylgruppen pro Molekül, etwa 5 bis 50 Gew.% eines reaktiven vernetzenden Monomers mit wenigstens drei (Meth-)Acryloylgruppen pro Molekül, etwa 20 bis 60 Gew.% eines fluorierten (Meth-) Acrylatmonomers, etwa 1 bis 30 Gew.% eines Organosilanmonomers mit einer oder mehreren funktionellen Gruppen, die zur Reaktion mit dem Glassubstrat geeignet sind und eine nicht hydrolisierbare organische funktionelle Gruppe aufweisen, die mit den (Meth-)Acryloylgruppen reagieren können, sowie eine wirksame Menge eines Polymerisationsinitiators.

EP 0536743 A1 beschreibt eine Harzzusammensetzung, die ein ultraviolett vernetzendes Harz und eine reaktive Komponente enthält, die wenigstens ein Siliziumatom mit einer Alkoxygruppe oder einem Halogenatom enthält, die weiterhin wenigstens zwei funktionelle Gruppen aufweist, die geeignet sind, eine chemische Bindung zu dem ultraviolett vernetzenden Harz einzugehen.

EP 0333464 A1 beschreibt eine optische Faser mit einem beschichteten Kern, wobei die Beschichtung einen geringeren Brechungsindex als der Kern aufweist. Die Beschichtung umfasst ein fluoriertes Monoacrylat, ein mehrfach funktionales vernetzendes Acrylat und einen Photoinitiator, wobei die Zusammensetzung weniger als 0,3 Gew. % eines mono- oder polyfunktionalen Thiols enthält.

EP 0196212 A2 beschreibt eine Klebezusammensetzung für optische Fasern. Die Klebezusammensetzung umfasst insbesondere ein definiertes Fluoroacrylat und weiterhin gegebenenfalls mehrfach funktionelle Acrylate oder Methacrylate, die zur Einstellung des Brechungsindexes vorhanden sind. Weiterhin enthält die Klebezusammensetzung gegebenenfalls einen Photoinitiator.

EP 0478261 A2 beschreibt ein Verfahren zur Herstellung eines Sauerstoff-durchlässigen Polymers, umfassend die Polymerisation wenigstens eines definierten Alkens, eines definierten Siloxans, das eine Acrylatgruppe aufweist sowie ein weiteres fluoriertes Acrylat.

Bekannte Beleuchtungseinrichtungen für Displays beispielsweise von mobilen Anwendungen weisen eine Lichtquelle auf, bei der es sich beispielsweise um eine röhrenförmige Lichtquelle (CCFL) handelt. Das von der Lichtquelle abgegebene Licht wird an einer Stirnseite eines im Querschnitt keilförmigen oder quaderförmigen Formkörpers in diesen eingekoppelt. Insbesondere auf Grund der keilförmigen Ausgestaltung des Formkörpers erfolgt eine Totalreflektion der Lichtstrahlen an der Phasengrenze und durch entsprechende Streuzentren ein Austreten der Lichtstrahlen an der Oberfläche des keilförmigen Formkörpers. Die Oberfläche des keilförmigen Formkörpers ist hierbei dem zu durchleuchtenden Display gegenüberliegend angeordnet. Die Oberfläche des Formkörpers ist derart strukturiert, dass durch Refraktion das Licht aus dem Lichtleiter austritt. Das so gebrochene Licht wird durch mehrere Folien, die zwischen dem Formkörper und dem Display angeordnet sind, kollimiert und derart gelenkt, dass ein im Wesentlichen weißes Licht zu dem Display gelangt. Der Aufbau derartiger Beleuchtungseinrichtungen ist kompliziert, zumal mehrere Folien beispielsweise in einen Rahmen oder dergleichen eingelegt werden müssen und sichergestellt werden muss, dass ein Verrutschen oder dergleichen der Folien vermieden ist. Auf Grund des komplizierten Aufbaus sind die Herstellungskosten hoch. Ferner besteht die Gefahr von Funktionsstörungen.

EP 1 700 871 B1 beschreibt einen transparenten Formkörper umfassend ein flächiges Substrat und eine auf einer Hauptfläche des Substrates befindliche Schicht einer Schichtdicke in einem Bereich von 3 bis 300 µm aus einer lösungsmittelfreien polymerisierten Zusammensetzung enthaltend
a) 35 bis 75 Gew.% wenigstens eines teilfluorierten Acrylats,
b) 24,9 bis 60 Gew.% wenigstens eines nichtfluorierten Acrylats, und
c) 0,1 bis 5 Gew.% wenigstens eines Photoinitiators,
wobei die Schicht auf der dem Substrat abgewandten Oberfläche eine Oberflächenstruktur mit diffraktiven Oberflächenelementen einer maximalen Strukturgröße von Fehlausbildungen dieser Oberflächenelemente von bis zu 100 nm aufweist.

Aufgabe der Erfindung ist es, ein Verfahren zum Erzeugen einer selbstleuchtenden Oberflächenstruktur eines Formkörpers zu schaffen, mit der beziehungsweise mit dem eine zuverlässige und kostengünstige Herstellung ohne zusätzlich notwendige Folien möglich ist.

In einer ersten Ausführungsform wird die der Erfindung zu Grunde liegende Aufgabe gelöst durch einen transparenten Formkörper umfassend ein flächiges Substrat und eine auf einer Hauptfläche des Substrates befindliche Schicht einer Schichtdicke in einem Bereich von 3 bis 300 µm aus einer lösungsmittelfreien polymerisierten Zusammensetzung enthaltend
a) 35 bis 75 Gew.% wenigstens eines teilfluorierten Acrylats,
b) 24,9 bis 60 Gew.% wenigstens eines nichtfluorierten Acrylats, und
c) 0,1 bis 5 Gew.% wenigstens eines Photoinitiators,
wobei die Schicht auf der dem Substrat abgewandten Oberfläche eine Oberflächenstruktur mit diffraktiven Oberflächenelementen einer maximalen Strukturgröße von Fehlausbildungen dieser Oberflächenelemente von bis zu 100 nm aufweist, dadurch gekennzeichnet, dass die Zusammensetzung Leuchtpigmente enthält.

Erfindungsgemäß wird bei der Erzeugung einer Oberflächenstruktur eines Formkörpers eine Abformzusammensetzung auf eine Negativ-Gussform und/oder ein Formkörper aufgebracht. Hierbei weist die Negativ-Gussform vorzugsweise die auf den Formkörper als Substrat zu übertragende Oberflächenstruktur als Negativform auf. Die Übertragung der Oberflächenstruktur erfolgt mit Hilfe der aushärtbaren Abformzusammensetzung, das sich nach dem Aushärten mit der Oberfläche des Formkörpers verbindet. Hierbei handelt es sich bei dem Formkörper um ein vorzugsweise aus einem transparenten Material, insbesondere transparentem Kunststoff hergestelltes Substrat. Die transparenten Kunststoffe umfassen vorzugsweise solche aus der Gruppe Methacrylat Polymere (beispielsweise PMMA), Polycarbonate, cyclische Olefinpolymere, Styrolpolymere, Polyacrylate, Polyethersulfone und/oder Polyimide. Der Formkörper kann auch aus Glas bestehen.

Die Abformzusammensetzung im Sinne der vorliegenden Erfindung enthält
a) 35 bis 75 Gew.% wenigstens eines teilfluorierten Acrylats,
b) 24,9 bis 60 Gew.% wenigstens eines nichtfluorierten Acrylats, und
c) 0,1 bis 5 Gew.% wenigstens eines Photoinitiators,
und ist dadurch gekennzeichnet, dass sie Leuchtpigmente enthält.

Teilfluorierte Acrylate im Sinne der vorliegenden Erfindung sind vorzugsweise lineare, verzweigte und/oder cyclische Alkylacrylate oder Mischungen dieser Acrylate, bei denen insbesondere die an die Acrylatfunktion angrenzenden ein oder zwei Kohlenstoffatome nicht fluoriert sind und bei denen die Alkylketten vorzugsweise zwischen 6 und 12 Kohlenstoffatome aufweisen. Vorteilhafterweise sind die übrigen Kohlenstoffatome des Alkylrests perfluoriert. Besonders ist das teilfluorierte Acrylat ein Perfluoroalkylethylacrylat (beispielsweise Fluowet^{®} AC 600 der Firma Clariant), wobei die Ethylgruppe nicht fluoriert ist und insbesondere der perfluorierte Alkylrest 4 bis 10 Kohlenstoffatome aufweist. Sind die Alkylketten länger, so ist die Entformbarkeit unter Umständen nicht mehr gegeben oder es bilden sich gegebenenfalls zwei Phasen der teilfluorierten und der nichtfluorierten Acrylatmonomere aus. Kommt es zur Ausbildung von zwei oder mehr Phasen in der Zusammensetzung der Monomere, so kann dies zu einer höheren Lichtstreuung (Haze) in der ausgehärteten Schicht führen. Sind die Alkylketten jedoch kürzer, so kann die resultierende Abformzusammensetzung zu niederviskos sein.

Die Molmasse der teilfluorierten Acrylatmonomere liegt daher vorzugsweise in einem Bereich von 350 bis 500 g/mol. Liegt die Molmasse der teilfluorierten Acrylatmonomere oberhalb dieses Bereiches, so kann die resultierende Abformzusammensetzung leicht eine zu hohe Viskosität erhalten, wodurch es zu einer verstärkten Bildung von Fehlbildungen und Artefakten der Oberflächenelemente kommen kann. Liegt die Molmasse der teilfluorierten Acrylatmonomere unterhalb dieses Bereiches, so kann die resultierende Abformzusammensetzung leicht eine zu niedrige Viskosität erhalten, wodurch es zu einer zu geringen Schichtdicke der Schicht als Teil des erfindungsgemäßen Formkörpers kommen kann.

Vorteilhafterweise liegt der Schmelzpunkt der teilfluorierten Acrylatmonomere in einem Bereich von 15 bis 40 °C. Dadurch dass die Abformzusammensetzung vorzugsweise bei Raumtemperatur eingesetzt wird, kann durch die Wahl des Schmelzpunktes der teilfluorierten Acrylatmonomere im bevorzugten Bereich nahe der Raumtemperatur zusätzlich die Viskosität der Abformzusammensetzung gesteuert werden.

Nichtfluorierte Acrylate im Sinne der Erfindung sind vorzugsweise lineare, verzweigte und/oder cyclische Alkylacrylate oder Mischungen dieser Acrylate. Besonders bevorzugt werden Monomere mit zwei oder mehr Acrylatfunktionen und/oder zwei oder mehr Alkoholgruppen und/oder mindestens einer Etherbrücke (beispielsweise Dipropylenglykoldiacrylat, Diethylenglykol-diacrylat, 1,6-Hexandiol-diacrylat, Tetraethylenglykoldiacrylat, Triethylenglykol-diacrylat, Tripropylendiacrylat, alkoxyliertes Hexandioldiacrylat, oder Esterdioldiacrylat oder Mischungen dieser Monomere), da diese Monomere dank ihrer mehrfachen Funktionalität in besonders stabilen und optisch einwandfreien Schichten als Teil des erfindungsgemäßen Formkörpers resultieren. Vorteilhafterweise weisen die Alkylketten zwischen 6 und 12 Kohlenstoffatome auf. Sind die Alkylketten länger, so bilden sich leicht zwei Phasen der teilfluorierten und der nichtfluorierten Acrylatmonomere aus. Sind die Alkylketten jedoch kürzer, so kann die resultierende Abformzusammensetzung zu niederviskos sein.

Die Molmasse der nichtfluorierten Acrylatmonomere liegt vorzugsweise in einem Bereich von 150 bis 340 g/mol. Liegt die Molmasse der teilfluorierten Acrylatmonomere oberhalb dieses Bereiches, so kann die resultierende Abformzusammensetzung leicht eine zu hohe Viskosität erhalten, wodurch es zu einer verstärkten Bildung von Fehlbildungen und Artefakten der Oberflächenelemente kommen kann. Liegt die Molmasse der teilfluorierten Acrylatmonomere unterhalb dieses Bereiches, so kann die resultierende Abformzusammensetzung leicht eine zu niedrige Viskosität erhalten, wodurch es zu einer zu geringen Schichtdicke der Schicht als Teil des erfindungsgemäßen Formkörpers kommen kann.

Photoinitiatoren im Sinne der Erfindung sind vorzugsweise Phenylketonderivate (beispielsweise Irgacure^{®} 184 und/oder Irgacure^{®} 819 der Firma Ciba Spezialitätenchemie Lampersheim GmbH), da diese besonders geringen negativen Einfluss auf die optischen Eigenschaften des resultierenden erfindungsgemäßen Formkörpers haben.

Vorzugsweise enthält die Abformzusammensetzung 50 bis 65 Gew.%, insbesondere 55 bis 60 Gew.% eines teilfluorierten Acrylats oder einer Mischung aus verschiedenen teilfluorierten Acrylaten, da sich bei einem zu hohen wie bei einem zu geringen Gehalt des teilfluorierten Acrylats leicht Phasentrennungen der teilfluorierten und der nichtfluorierten Acrylatmonomere ausbilden können.

Die Abformzusammensetzung enthält vorteilhafterweise 34,9 bis 45 Gew. % eines nichtfluorierten Acrylats oder einer Mischung aus verschiedenen nichtfluorierten Acrylaten. Bei geringerem Gehalt an nichtfluorierten Acrylaten wurde eine verstärkte Bildung von zweiphasigen Abformzusammensetzungssystemen beobachtet. Durch die Ausbildung von Phasentrennungen in der Zusammensetzung der Monomere kommt es zu einer höheren Lichtstreuung (Haze) in der ausgehärteten Schicht. Bei einem höheren Anteil an nichtfluorierten Acrylaten kam es zu einer stärkeren Haftung der ausgehärteten Abformzusammensetzung mit der Negativ-Gussform und dadurch zu Problemen bei der Entformung.

Vorteilhafterweise enthält die Abformzusammensetzung 1 bis 2 Gew. % eines Photoinitiators oder einer Mischung verschiedener Photoinitiatoren. Hierdurch wird eine besonders gute Vernetzung der Monomere und damit eine bessere optische Qualität und mechanische Belastbarkeit bewirkt.

Vorzugsweise weist die Abformzusammensetzung eine Viskosität von 2 bis 30 mPas (cP) bei Raumtemperatur auf. Hierdurch kann die Oberflächenstruktur der Negativ-Gussform beziehungsweise der Negativ-Gussform besonders exakt abgebildet werden. Die Viskosität kann bei 25 °C mit einem Brookfield Viskosimeter bei einer Umdrehungsgeschwindigkeit von 900 U/min und einer CAP-1 Spindel und einem Probenvolumen von 67 µl gemessen werden.

Vorzugsweise ist die Abformzusammensetzung einphasig und/oder homogen und weist vorteilhafterweise eine Dichte in einem Bereich von 1 bis 1,5 g/ml auf. Dadurch weist die Abformzusammensetzung eine höhere Dichte als übliche organische Zusammensetzungen und Flüssigkeiten auf und kann etwaig vorhandene organische Flüssigkeiten aus der Negativ-Gussform verdrängen. So können wiederum Fehlausbildungen der gehärteten Schicht mit den Oberflächenelementen vermieden werden.

Die Abformzusammensetzung ist frei von Lösungsmitteln, da dies nicht nur zu einem umweltfreundlicheren Herstellungsverfahren führt, sondern auch das bei der Aushärtung möglicherweise entweichende Lösungsmittel zu Defekten in der Oberflächenstruktur des erfindungsgemäßen Formkörpers führen kann.

Insbesondere wird die der Erfindung zu Grunde liegende Aufgabe durch einen transparenten Formkörper gelöst, der ein flächiges Substrat und eine auf einer Hauptfläche des Substrates befindliche Schicht einer Schichtdicke in einem Bereich von 3 bis 300 µm aus einer polymerisierten erfindungsgemäßen Abformzusammensetzung umfasst, wobei die Schicht auf der dem Substrat abgewandten Oberfläche eine Oberflächenstruktur mit diffraktiven Oberflächenelementen einer maximalen Strukturgröße von Fehlausbildungen dieser Oberflächenelemente von bis zu 50 nm aufweist.

Fehlausbildungen im Sinne der Erfindung sind alle diejenigen Strukturen auf der Oberfläche der Schicht des erfindungsgemäßen Formkörpers, die unbeabsichtigt sind. Dies sind beispielsweise Ausbrüche, Abformungsfehler und ähnliche Defekte. Weisen beispielsweise die diffraktiven Oberflächenelemente des erfindungsgemäßen Formkörpers eine Größe von 0,04 bis 10.000 µm² und einen Abstand untereinander von 1 bis 100 µm auf, so weisen erfindungsgemäß diese Oberflächenelemente vorzugsweise an ihren Außenflächen keine zusätzlichen Strukturen auf, die unbeabsichtigt sind und eine Strukturgröße von mehr als 100 nm besitzen. Das maximale Volumen dieser Fehlausbildungen beträgt vorzugsweise 1.000.000 nm³, insbesondere 125.000 nm³.

Vorteilhafterweise beträgt die Schichtdicke der erfindungsgemäßen Schicht auf dem Substrat, die zusammen den erfindungsgemäßen Formkörper ergeben, 5 bis 50 µm, insbesondere 10 bis 30 µm. Liegt die Schichtdicke unterhalb von 5 µm, so kann die Gestaltungsfreiheit bezüglich der diffraktiven Oberflächenelemente zu sehr eingeschränkt sein. Liegt die Schichtdicke jedoch oberhalb von 50 µm, so kann es zu unerwünschten Einbußen bezüglich der optischen Qualität des erfindungsgemäßen Formkörpers kommen.

Das Substrat besteht vorzugsweise aus Glas, einem Methacrylat Polymer (beispielsweise PMMA), Polycarbonat, einem cyclischen Olefinpolymer, Styrolpolymer, Polyacrylat, Polyethersulfon und/oder Polyimid, insbesondere aus PMMA. Diese Materialien verbinden besonders gute optische Eigenschaften mit einer hohen Kompatibilität mit der erfindungsgemäßen Abformzusammensetzung.

"Transparent" im Sinne der Erfindung ist der Formkörper, wenn die maximale Lichtstreuung (Haze) gemessen nach ASTM D 1003 der Schicht ohne Berücksichtigung der diffraktiven Oberflächenelemente bei einer Schichtdicke von 10 mm bis zu 10 %, vorzugsweise bis zu 5 % beträgt. Hierdurch kann eine besonders hohe Lichtausbeute für die gewollte Abstrahlrichtung erhalten werden und es entsteht weniger Streuverlust in die ungewollten Abstrahlrichtungen.

Die Farbe des erfindungsgemäßen Formkörpers in Abwesenheit der Leuchtpigmente liegt vorzugsweise in einem nach dem CIE Lab System definierten Farbraum in einem Bereich a < 0,5 und/oder b < 0,5 und/oder L > 80%. Dieser Farbraum entspricht im Wesentlichen einem Bereich 0,0 < x < 0,4 und 0,3 < y < 0,4 im CIE 1931 Farbmodell. Bedingt durch die Anwesenheit der Leuchtpigmente können die gewünschte Farbräume geschaffen werden.

In einer dritten Ausführungsform wird die der Erfindung zu Grunde liegende Aufgabe gelöst durch ein im Wesentlichen druckloses Verfahren zur Herstellung eines erfindungsgemäßen Formkörpers umfassend folgende Schritte:
a) Bereitstellen einer Negativ-Gussform mit Ausformungen von Oberflächenelementen,
b) Einbringen der erfindungsgemäßen, Leuchtpigmente enthaltenden Abformzusammensetzung in die Negativ-Gussform in einer Menge, die die Ausformungen der Oberflächenelemente übersteigt,
c) Aufbringen eines Substrates auf die freiliegende Oberfläche der Abformzusammensetzung,
d) Polymerisieren der Abformzusammensetzung unter Verbinden der Schicht der Abformzusammensetzung mit dem Substrat zur Herstellung des Formkörpers, und
e) Entnehmen des fertigen Formkörpers aus der Negativ-Gussform.

Dabei berührt das Substrat nicht die Oberfläche der Negativform, sondern schwimmt praktisch auf einer freiliegenden Oberfläche der Abformzusammensetzung.

Nach dem sandwichartigen Aufeinanderlegen des Substrates und der Negativ-Gussform mit der Abformzusammensetzung als Zwischenschicht erfolgt das Aushärten der Abformzusammensetzung. Dies erfolgt beispielsweise unter Temperatur- und/ oder Strahlungseinwirkung, wobei insbesondere das Verwenden von UV-Strahlung bevorzugt ist, da die Abformzusammensetzung so besonders schnell gehärtet werden kann. Bei der Abformzusammensetzung ist eine Aushärtezeit von weniger als 3 Sekunden, insbesondere von ca. 1 Sekunde ausreichend, da hierdurch die Prozessdauer und somit die Kosten für das Herstellungsverfahren reduziert werden können. Anschließend werden der Formkörper und die Negativ-Gussform von einander getrennt. Da die Negativ-Gussform vorzugsweise eine Oberfläche aufweist, die sich mit der Abformzusammensetzung nicht verbindet bzw. die Haftkraft zwischen der Oberfläche der Negativ-Gussform und der Abformzusammensetzung geringer ist, als die Haftkraft zwischen der Abformzusammensetzung und dem Formkörper, ist vorzugsweise ein Arbeiten ohne Lösungsmittel zur Trennung des Formkörpers von der Negativ-Gussform möglich. Dies hat den Vorteil, dass die sehr feinen Oberflächenstrukturen der Negativ-Gussform nicht durch Lösungsmittel oder dergleichen zugesetzt werden und somit die Genauigkeit der Verformung der Oberflächenstruktur beeinträchtigt würde.

Drucklos im Sinne der Erfindung heißt, dass auf die Abformzusammensetzung in den Schritten c) und d) kein Druck ausgeübt wird, der über denjenigen Druck hinausgeht, der durch Luftdruck, die Schwerkraft, das darüber befindliche Substrat und das leichte Andrücken des Substrats an die Negativ-Gussform hervorgerufen wird. Dieses leichte Andrücken ist so zu verstehen als ein Druck, der notwendig ist, um einen Schaumstoff mit einer Eindruckhärte zwischen 50 und 200 N nach DIN 53576-B um 3 mm einzudrücken.

Auf Grund der sehr feinen Oberflächenstruktur der Negativ-Gussform ist es erfindungsgemäß von besonderer Bedeutung, dass die Schicht der Abformzusammensetzung zwischen der Negativ-Gussform und dem Substrat sehr gleichmäßig ist und insbesondere keine Verunreinigungen, wie Lufteinschlüsse und dergleichen, aufweist. Um dies zu erreichen, wird das Substrat oder die Negativ-Gussform zuerst an einer Seite angedrückt. Dies führt dazu, dass die Negativ-Gussform und das Substrat ausgehend von dieser ersten Seite zu Beginn des Andrückvorgangs einen sich erweiternden Spalt aufweisen. Anschließend wird nun die Andrückfläche ausgehend von der ersten Seite in Richtung der zweiten Seite vergrößert. Der Spalt wird somit geschlossen, wobei gegebenenfalls bestehende Luftblasen aus dem Spalt herausgedrückt werden. Auf Grund der in dem Spalt auftretenden Kapillarkräfte ist ein gleichmäßiges Verteilen der Abformzusammensetzung über die gesamte gewünschte Fläche, insbesondere die gesamte an der Negativ-Gussform anliegende Seite des Substrats, gewährleistet.

Bei der Negativ-Gussform handelt es sich vorzugsweise um einen so genannten Shim. Hiermit wird eine Negativ-Gussform bezeichnet, die besonders für feine Abformvorgänge im Bereich der Optik geeignet ist. Um das Verwenden von Trennmitteln vermeiden zu können, weist der Shim vorzugsweise eine Nickeloberfläche auf oder besteht vollständig aus Nickel. Hierdurch wird eine besonders leichte Entformung gewährleistet. Das Nickel-Plättchen ist vorzugsweise sehr dünn ausgebildet und weist beispielsweise eine Dicke von etwa 0,1 - 1 mm auf. Dadurch kann das Plättchen mit besonders geringer Kraft elastisch verformt werden, um die Entformung zu bewerkstelligen. Zur Erzeugung der sehr kleinen Oberflächenstruktur in der Nickelschicht erfolgt vorzugsweise ein galvanisches Abformen des Nickel-Shims. Die Oberflächenstruktur ist vorzugsweise durch lithographische Verfahren in den Nickel-Shim eingebracht. Damit kann bei der Herstellung der Negativ-Gussform auf etablierte Verfahren zurückgegriffen werden. Vorzugsweise ist der Nickel-Shim zur Versteifung mit einem Versteifungskörper, wie beispielsweise einer Glasfaserplatte, verbunden, insbesondere verklebt, damit die Verformung beim Entformen auch tatsächlich elastisch ist und das Plättchen als solches nicht mit der Zeit dauerhaft verformt wird.

Vorzugsweise erfolgt zum gleichmäßigen Aufbringen bzw. Verteilen der Abformzusammensetzung als Abformzusammensetzung zwischen dem Formkörper und der Negativ-Gussform ein kontinuierliches Vergrößern der Andrückfläche. Hierbei ist insbesondere sichergestellt, dass angedrückte Bereiche nicht mehr voneinander getrennt werden, um ein Erzeugen von Einschlüssen zu vermeiden. Vorzugsweise schließt der Formkörper während des Andrückvorgangs mit der Negativ-Gussform einen Öffnungswinkel ein, der vorzugsweise < 3° und besonders bevorzugt < 2° ist, wodurch eine möglichst gleichmäßige Verteilung der Abformzusammensetzung erreicht werden kann. Das Aufbringen der Abformzusammensetzung auf die Negativ-Gussform und/ oder den Formkörper erfolgt vorzugsweise durch Auftropfen, da hierbei gleichzeitig gut dosiert werden kann und die Abformzusammensetzung auf der Negativ-Gussform besonders gut spreitet. Hierbei wird vorzugsweise mit Hilfe einer Dispensiereinrichtung ein exaktes Abformzusammensetzungsvolumen aufgebracht, damit die Reproduzierbarkeit des erfindungsgemäßen Formkörpers leichter erreicht werden kann. Bei einer Oberfläche von 0,0016 m² wird vorzugsweise ein Abformzusammensetzungsvolumen von 80 µl +/- 2 µl aufgebracht, da hierdurch die Negativ-Gussform besonders exakt für die beschriebenen Dimensionen mit Abformzusammensetzung ausgefüllt wird. Je m² erfolgt somit aus den vorgenannten Gründen ein Aufbringen des Abformzusammensetzungsvolumens von vorzugsweise 50 ml. Um sicherzustellen, dass die mit einer Struktur zu versehende Oberfläche des Formkörpers im gesamten Bereich mit Abformzusammensetzung benetzt wird, erfolgt das Zuführen der Abformzusammensetzung vorzugsweise mit einer adäquaten Überschussmenge.

Um ein sicheres Verbinden der Abformzusammensetzung mit dem Formkörper zu gewährleisten, wird die mit der Abformzusammensetzung in Kontakt zu bringende Oberfläche des Substrats vorzugsweise vorbehandelt, um eine besonders gute Haftung der Schicht aus gehärteter Abformzusammensetzung und dem Substrat zu erzielen. Besonders bevorzugt ist es, eine Vorbehandlung mit UV-Strahlung vorzunehmen, da hierdurch möglicherweise radikalische Reaktionszentren auf der Oberfläche des Substrates entstehen und die Vernetzung der Abformzusammensetzung möglicherweise an der Oberfläche des Substrates bereits beim Aufbringen der Abformzusammensetzung beginnt. Hierbei ist bei einer Verwendung von PMMA als Substrat und der vorstehend beschriebenen Abformzusammensetzung eine Vorbehandlung von wenigen Sekunden, insbesondere weniger als 2 Sekunden ausreichend. Besonders bevorzugt ist es, bei einem durch UV-Strahlung unterstützten Aushärten eine gemeinsame Vorrichtung vorzusehen, die sowohl zur Vorbehandlung als auch zur Aushärtung dient. Hierbei ist es möglich, ein noch zu beschichtendes Substrat vorzubehandeln, während ein anderes, bereits mit Abformzusammensetzung versehenes Substrat der Härtung der Abformzusammensetzung zugeführt wird.

Besonders bevorzugt ist es, während des Aufbringens der Abformzusammensetzung und/ oder des Andrückens des Substrates und/ oder des Aushärtens der Abformzusammensetzung eine Schutzgasatmosphäre, insbesondere einer Atmosphäre von Argon, Stickstoff und/oder Kohlenstoffdioxid vorzusehen, da hierdurch die Aushärtung möglichst frei von äußeren Einflüssen wie dem Ozongehalt (Quelle von Radikalen) der Umgebungsluft besser kontrolliert werden kann. Hierdurch wird insbesondere die vorzeitige Bildung von Radikalen oder anderen Beeinträchtigungen der Abformzusammensetzung durch die Luft vermieden.

Vorzugsweise erfolgt das Trennen des Formkörpers von der Negativ-Gussform durch elastisches Verformen des Formkörpers und/ oder der Negativ-Gussform, da die Negativ-Gussform so wieder verwendbar ist. Vorzugsweise wird nur die Negativ-Gussform elastisch verformt, um ein Beschädigen der auf den Formkörper aufgebrachten Oberflächenstruktur zu vermeiden. Da erfindungsgemäß die Negativ-Gussform vorzugsweise eine Nickel-Oberfläche aufweist und die ausgehärtete Abformzusammensetzung an der Oberfläche des Substrats besser haftet als an der Nickel-Oberfläche, ist ein Vorsehen von Trennmitteln nicht nötig. Vorzugsweise wird also bei dem erfindungsgemäßen Verfahren kein Trennmittel eingesetzt. Ferner ist es bei dieser bevorzugten Ausführungsform des Verfahrens nicht erforderlich, die Negativ-Gussform zu reinigen, da keine ausgehärteten Abformzusammensetzungsrückstände auf der Negativ-Gussform verbleiben. Die Negativ-Gussform weist somit eine Selbstreinigungsfunktion auf.

Vorteilhafterweise wird das Verfahren bei Raumtemperatur durchgeführt. Hierdurch kommt es zu einer erheblichen Vereinfachung der Prozessführung im Vergleich zu herkömmlichen Verfahren.

Die in die Negativ-Gussform eingebrachte Menge der Abformzusammensetzung in Schritt b) liegt vorteilhafterweise in einem Bereich von 60 bis 100 µl. Besonders bevorzugt ist es, wenn genau soviel Abformzusammensetzung eingebracht wird, dass sich im gesamten Randbereich des Substrats ein Meniskus der Abformzusammensetzung ausbildet. Dies hat den Vorteil, dass nicht mehr Abformzusammensetzung als notwendig eingesetzt wird und andererseits die Schicht der Abformzusammensetzung zwischen dem Substrat und der Negativ-Gussform eine geschlossene Schicht ist.

Das erfindungsgemäße Verfahren wird vorzugsweise in einer staubgeschützten Umgebung durchgeführt, damit eine einwandfreie optische Qualität der erfindungsgemäßen Formkörper mit der Beschichtung erzielt werden kann.

Weiterhin ist es vorteilhaft, wenn die Abformzusammensetzung erst durch das Aufbringen des Substrats auf der Negativ-Gussform verteilt wird. Dadurch kann Luftblasenbildung und somit Fehlausbildung der gehärteten Schicht vermieden werden.

Der Begriff Leuchtpigmente im Sinne der vorliegenden Erfindung umfasst eine Gruppe von Pigmenten, die mehr Licht im sichtbaren Bereich remittieren, als eingestrahlt wird. Dieser Effekt wird auch als Lumineszenz bezeichnet. Dies unterscheidet Leuchtpigmente von allen anderen Pigmentarten. Leuchtpigmente unterscheiden sich von Leuchtfarbstoffen üblicherweise dadurch, dass sie in dem Anwendungsmedium unlöslich sind. Im Sinne der vorliegenden Erfindung steht der Begriff der Leuchtpigmente synonym auch für die löslichen Leuchtfarbstoffe. Bedingt durch die gewünschte äußerst geringe Schichtdicke ist es erforderlich, dass die in dem Medium unlöslichen Pigmente eine entsprechend geringe Korngröße aufweisen, die kleiner als die resultierende Schichtdicke sein sollte.

Man unterscheidet zwischen Fluoreszenzpigmenten, auch Tagesleuchtpigmente genannt, und Phosphoreszenzpigmenten, auch Nachleuchtpigmente genannt. Von Fluoreszenz spricht man im Allgemeinen, wenn das Nachleuchten kürzer als eine Tausendstel Sekunde andauert, bei größerer Nachleuchtdauer spricht man von Phosphoreszenz.

Anorganische Nachleuchtpigmente bestehen üblicherweise aus einer anorganischen Grundstruktur und einer Dotierung mit einem Aktivator, sowie meist Co-Aktivatoren. Verwendet werden im Wesentlichen zwei Typen: die etwas älteren, auf Sulfiden, meist Zinksulfid oder auch Calciumsulfid basierenden Pigmente, sowie die moderneren Leuchtpigmente auf Basis von Erdalkalialuminaten, beispielsweise Strontiumaluminat. Die Dotierung erfolgt häufig mit Europium. Grün leuchtende ZnS-Pigmente sind normalerweise mit Kupfer dotiert.

Beide Pigmenttypen nehmen zunächst Energie durch Bestrahlung auf. Bei Tagesleuchtpigmenten wird UV-Licht aufgenommen und unmittelbar im sichtbaren Bereich wieder abgegeben, während bei Nachleuchtpigmenten sichtbares Licht aufgenommen wird und zeitverzögert abgegeben wird. In diesem Zusammenhang sind auch die sogenannten up converter und down converter zu nennen, die aus der Quantenoptik bekannt sind. Unter up conversion versteht man einen Prozess, bei dem Licht mit einer Photonenenergie emittiert wird, die höher ist als die des Anregungslichts

Allgemein hebt die Bestrahlung Elektronen in den Anregungszentren, wo die Aktivatoren (z.B. Fremdatome) sitzen, auf ein höheres Energieniveau an ("Aufladen"). Bei längerer Bestrahlung wird ein Sättigungszustand erreicht, nach dem nicht mehr Energie aufgenommen werden kann. Beim Zurückfallen in den Grundzustand wird die Energie in Form von sichtbarem Licht wieder frei.

Nachleuchtpigmente oder Phosphoreszenzpigmente leuchten nach der Bestrahlung mit sichtbarem Licht nach. Diese Eigenschaft macht man sich zunutze, um im Dunkeln nachleuchtende Farben und Lacke zu erzeugen, die vorher durch Bestrahlung mit Licht aufgeladen werden müssen. Diese Beschichtungsstoffe bezeichnet man als Nachleuchtfarben. Phosphoreszenzpigmente auf Basis von Erdalkalialuminaten sind gegenüber den Zinksulfidpigmenten wesentlich leuchtstärker und leuchten erheblich länger; auch haben sie den Vorteil, unter Einwirkung von UV-Licht nicht wie jene zu vergrauen. Dafür benötigen sie eine längere Zeit bis zur Sättigung.

Wie bei Buntpigmenten können auch aus Leuchtpigmenten verschiedene Farbtöne gemischt werden. Bei der Beurteilung des gewünschten Farbtons muss jedoch beachtet werden, dass Nachleuchtpigmente zwei Farborte besitzen, die in der Regel nicht identisch sind. Ein Farbort ist unter normaler Beleuchtung sichtbar, der andere dagegen im Dunkeln.

Fluoreszenzpigmente werden eher selten eingesetzt, da für die Anwendungen in Neonfarben vorzugsweise fluoreszierende Farbstoffe eingesetzt werden, wenn kein höheres Echtheitsniveau gefordert wird.

Die erfindungsgemäßen Formkörper und Abformzusammensetzungen sind beispielsweise in Tagesleuchtfarben, in Leucht(druck)farben, in Instrumentenanzeigen, Fernsehbildröhren, Röntgen- und Radarleuchtschirmen, Leuchtplaketten, Sicherheits- od. Signalfarben für Schutzbekleidung, optischen Aufhellern, insbesondere als Sicherheitsmerkmal, beispielsweise auf flexiblen oder starren Träger, insbesondere Geldscheinen einsetzbar. Daneben sind die erfindungsgemäßen Ausführungsformen auch im Schutz von Marken und Produkten einsetzbar, wenn diese damit versehen sind. Hier sind gegenüber einem vergleichbaren Schutz durch die Aufbringung von Hologrammen Verbesserungen vorhanden, die sich beispielsweise aus der gezielten Abstrahlung von Licht definierter Wellenlänge im sichtbaren sowie im UV-Bereich als auch im IR-Bereich bemerkbar machen. Darüber können mit Hilfe der vorliegenden Erfindung Beleuchtungseinrichtungen verbessert werden, die beispielsweise in der WO 2006027304 (A1) beschrieben sind.

Eine weitere bevorzugte Ausführungsform der vorliegenden Erfindung ist **dadurch gekennzeichnet, dass** die Leuchtpigmente ausgewählt sind aus nachleuchtenden oder selbstleuchtenden Leuchtstoffen.

Auch wenn die Menge der Leuchtpigmente in den erfindungsgemäßen Ausführungsformen nicht von überragender Bedeutung ist, da ein Fachmann die erforderliche Konzentration dem Anwendungszweck angepasst einstellen kann, so ist doch eine bevorzugte Ausführungsform der vorliegenden Erfindung **dadurch gekennzeichnet, dass** die Leuchtpigmente in einer Menge von 0,01 Gew. % bis 50 Gew. %, insbesondere 1 Gew. % bis 10 Gew. %, bezogen auf die Acrylatbestandteile enthalten sind.

## Patentansprüche

1. Transparenter Formkörper umfassend ein flächiges Substrat und eine auf einer Hauptfläche des Substrates befindliche Schicht einer Schichtdicke in einem Bereich von 3 bis 300 µm aus einer lösungsmittelfreien polymerisierten Zusammensetzung enthaltend
a) 35 bis 75 Gew.% wenigstens eines teilfluorierten Acrylats,
b) 24,9 bis 60 Gew.% wenigstens eines nichtfluorierten Acrylats, und
c) 0,1 bis 5 Gew.% wenigstens eines Photoinitiators,
wobei die Schicht auf der dem Substrat abgewandten Oberfläche eine Oberflächenstruktur mit diffraktiven Oberflächenelementen einer maximalen Strukturgröße von Fehlausbildungen dieser Oberflächenelemente von bis zu 100 nm aufweist, **dadurch gekennzeichnet, dass** die Zusammensetzung Leuchtpigmente enthält.

2. Formkörper gemäß Anspruch 1, **dadurch gekennzeichnet, dass** das teilfluorierte Acrylat linear, verzweigt und/oder cyclisch ist, und bei dem die an die Acrylatfunktion angrenzenden Kohlenstoffatome nicht fluoriert sind.

3. Formkörper gemäß Anspruch 1, **dadurch gekennzeichnet, dass** das teilfluorierte Acrylat ein Perfluoroalkylethylacrylat ist, wobei die Ethylgruppe nicht fluoriert ist und insbesondere der perfluorierte Alkylrest 4 bis 10 Kohlenstoffatome aufweist.

4. Formkörper gemäß Anspruch 1, **dadurch gekennzeichnet, dass** das teilfluorierte Acrylat in einer Menge von 50 bis 65 Gew. %, insbesondere in einer Menge von 55 bis 65 Gew. % enthalten ist.

5. Formkörper gemäß Anspruch 1, **dadurch gekennzeichnet, dass** das nichtfluorierte Acrylat in einer Menge von 34,9 bis 45 Gew. % enthalten ist.

6. Formkörper gemäß Anspruch 1, **dadurch gekennzeichnet, dass** die Photoinitiatoren in einer Menge von 1 bis 2 Gew. % enthalten sind.

7. Formkörper gemäß Anspruch 1, **dadurch gekennzeichnet, dass** sie eine Viskosität in einem Bereich von 2 bis 30 mPas aufweist.

8. Formkörper gemäß Anspruch 1, **dadurch gekennzeichnet, dass** sie eine Dichte in einem Bereich von 1 bis 1,5 g/ml aufweist.

9. Formkörper gemäß Anspruch 1, **dadurch gekennzeichnet, dass** sie aus einer einzigen flüssigen Phase besteht.

10. Im wesentlichen druckloses Verfahren zur Herstellung eines Formkörpers gemäß Anspruch 1 umfassend folgende Schritte:
a) Bereitstellen einer Negativ-Gussform mit Ausformungen von Oberflächenelementen,
b) Einbringen der Abformzusammensetzung gemäß Anspruch 1 in die Negativ-Gussform in einer Menge, die die Ausformungen der Oberflächenelemente übersteigt,
c) Aufbringen eines Substrates auf die freiliegende Oberfläche der Abformzusammensetzung,
d) Polymerisieren der Abformzusammensetzung unter Verbinden der Schicht der Abformzusammensetzung mit dem Substrat zur Herstellung des Formkörpers, und
e) Entnehmen des fertigen Formkörpers aus der Negativ-Gussform.

11. Abformzusammensetzung enthaltend
a) 35 bis 75 Gew.% wenigstens eines teilfluorierten Acrylats,
b) 24,9 bis 60 Gew.% wenigstens eines nichtfluorierten Acrylats, und
c) 0,1 bis 5 Gew.% wenigstens eines Photoinitiators,
**dadurch gekennzeichnet, dass** sie Leuchtpigmente enthält.

12. Ausführungsform nach einem der Ansprüche 1 bis 11, **dadurch gekennzeichnet, dass** die Leuchtpigmente ausgewählt sind aus nachleuchtenden oder selbstleuchtenden Leuchtstoffen.

13. Ausführungsform nach einem der Ansprüche 1 bis 12, **dadurch gekennzeichnet, dass** die Leuchtpigmente in einer Menge von 0,01 Gew. % bis 50 Gew. %, insbesondere 1 Gew. % bis 10 Gew. %, bezogen auf die Acrylatbestandteile enthalten sind.

## Claims

1. A transparent molded part comprising a sheet-like substrate and, provided on a major surface of the substrate, a layer having a layer thickness within a range of from 3 to 300 µm and consisting of a solvent-free polymerized composition containing
a) from 35 to 75% by weight of at least one partially fluorinated acrylate;
b) from 24.9 to 60% by weight of at least one non-fluorinated acrylate; and
c) from 0.1 to 5% by weight of at least one photoinitiator;
wherein said layer has a surface structure with diffractive surface elements with a maximum structural size of defects of such surface elements of up to 100 nm on the surface facing away from the substrate, **characterized in that** said composition contains luminescent pigments.

2. The molded part according to claim 1, **characterized in that** said partially fluorinated acrylate is linear, branched and/or cyclic, and wherein the carbon atoms adjacent to the acrylate functionality are not fluorinated.

3. The molded part according to claim 1, **characterized in that** said partially fluorinated acrylate is a perfluoroalkylethyl acrylate, wherein said ethyl group is not fluorinated and, in particular, the perfluorinated alkyl residue has from 4 to 10 carbon atoms.

4. The molded part according to claim 1, **characterized in that** said partially fluorinated acrylate is contained in an amount of from 50 to 65% by weight, especially in an amount of from 55 to 65% by weight.

5. The molded part according to claim 1, **characterized in that** said non-fluorinated acrylate is contained in an amount of from 34.9 to 45% by weight.

6. The molded part according to claim 1, **characterized in that** said photoinitiators are contained in an amount of from 1 to 2% by weight.

7. The molded part according to claim 1, **characterized in that** said composition has a viscosity within a range of from 2 to 30 mPa·s.

8. The molded part according to claim 1, **characterized in that** said composition has a density within a range of from 1 to 1.5 g/ml.

9. The molded part according to claim 1, **characterized in that** said composition consists of a single liquid phase.

10. Essentially pressureless process for the preparation of a molded part according to claim 1, comprising the following steps:
a) providing a negative casting mold with shapings of surface elements;
b) introducing the impression composition according to claim 1 into said negative casting mold in an amount exceeding the shapings of said surface elements;
c) applying a substrate to the exposed surface of said impression composition;
d) polymerizing said impression composition to bond the layer of said impression composition with the substrate for preparing a molded part; and
e) removing the finished molded part from said negative casting mold.

11. An impression composition containing:
a) from 35 to 75% by weight of at least one partially fluorinated acrylate;
b) from 24.9 to 60% by weight of at least one non-fluorinated acrylate; and
c) from 0.1 to 5% by weight of at least one photoinitiator;
**characterized by** containing luminescent pigments.

12. An embodiment according to any of claims 1 to 11, **characterized in that** said luminescent pigments are selected from phosphorescent or fluorescent phosphors.

13. An embodiment according to any of claims 1 to 12, **characterized in that** said luminescent pigments are contained in an amount of from 0.01 to 50% by weight, especially from 1 to 10% by weight, based on the acrylate components.

## Revendications

1. Pièce moulée transparente, comprenant un substrat en feuille et, étendue sur une surface majeure dudit substrat, une couche ayant une épaisseur de couche comprise dans une gamme allant de 3 à 300 µm et consistant en une composition polymérisée exempt de solvant, contenant :
a) de 35 à 75% en poids d'au moins un acrylate partiellement fluoré ;
b) de 24,9 à 60% en poids d'au moins un acrylate non-fluoré ;
c) de 0,1 à 5% en poids d'au moins un photoinitiateur ;
dans laquelle ladite couche, sur le côté opposé au substrat, possède une structure de surface avec des éléments de surface diffractives ayant une largeur de structure maximale de défauts desdits éléments de surface allant jusqu'à 100 nm, **caractérisée en ce que** ladite composition contient des pigments luminescents.

2. Pièce moulée selon la revendication 1, **caractérisée en ce que** ledit acrylate partiellement fluoré est linéaire, ramifié et/ou cyclique, et dans lequel les atomes de carbone voisins à la fonction acrylate ne sont pas fluorés.

3. Pièce moulée selon la revendication 1, **caractérisée en ce que** ledit acrylate partiellement fluoré est un acrylate de perfluoroalkyle éthyle, dans lequel le groupement d'éthyle n'est pas fluoré et notamment le groupe d'alkyle perfluoré comprend de 4 à 10 atomes de carbone.

4. Pièce moulée selon la revendication 1, **caractérisée en ce que** ledit acrylate partiellement fluoré est contenu dans une quantité de 50 à 65% en poids, notamment dans une quantité de 55 à 65% en poids.

5. Pièce moulée selon la revendication 1, **caractérisée en ce que** ledit acrylate non-fluoré est contenu dans une quantité de 34,9 à 45% en poids.

6. Pièce moulée selon la revendication 1, **caractérisée en ce que** lesdits photo-initiateurs sont contenus dans une quantité de 1 à 2% en poids.

7. Pièce moulée selon la revendication 1, **caractérisée en ce que** ladite composition a une viscosité dans une gamme allant de 2 à 30 mpa·s.

8. Pièce moulée selon la revendication 1, **caractérisée en ce que** ladite composition a une densité dans une gamme allant de 1 à 1,5 g/ml.

9. Pièce moulée selon la revendication 1, **caractérisée en ce que** ladite composition consiste en une seule phase liquide.

10. Procédé essentiellement sans pression pour la préparation d'une pièce moulée selon la revendication 1, comprenant les étapes suivantes :
a) la fourniture d'une moule de fonte négative ayant des formes d'éléments de surface ;
b) l'introduction de ladite composition à empreinte selon la revendication 1 dans ladite moule de fonte négative dans une quantité qui excède les formes des éléments de surface ;
c) l'application d'un substrat sur la surface exposée de ladite composition à empreinte ;
d) la polymérisation de ladite composition à empreinte pour relier la couche de la composition à empreinte au substrat pour préparer la pièce moulée ; et
e) le démoulage de la pièce moulée achevée de ladite moule de fonte négative.

11. Composition à empreinte contenant :
a) de 35 à 75% en poids d'au moins un acrylate partiellement fluoré ;
b) de 24,9 à 60% en poids d'au moins un acrylate non-fluoré ;
c) de 0,1 à 5% en poids d'au moins un photoinitiateur ;
**caractérisée en ce qu'**elle contient des pigments luminescents.

12. Mode de réalisation selon l'une quelconque des revendications 1 à 11, **caractérisée en ce que** lesdits pigments luminescents sont choisis parmi les pigments phosphorescents et les pigments fluorescents.

13. Mode de réalisation selon l'une quelconque des revendications 1 à 12, **caractérisée en ce que** lesdits pigments luminescents sont contenus dans une quantité de 0,01 à 50% en poids, notamment 1 à 10% en poids, par rapport aux composants acrylate.
